# EUROPEAN PATENT SPECIFICATION

(11) **EP 2 337 297 B1**
(45) Date of publication and mention of the grant of the patent: **20.02.2013**
(21) Application number: 09179352.1
(22) Date of filing: 15.12.2009
(51) Int. Cl.: A63F 13/12, H04L 29/06, A63F 13/00

(54) **Communication pad for a communication terminal**
Übertragungsweg für ein Kommunikationsendgerät
Pavé de communication pour terminal de communication

(43) Date of publication of application: 22.06.2011
(73) Proprietor: NXP B.V., 5656 AG Eindhoven (NL)
(72) Inventor: Buhr, Wolfgang, 5656 AE Eindhoven (NL)
(74) Representative: Krott, Michel

(56) References cited:
- EP-A1- 1 583 321
- US-A1- 2004 092 310
- US-A1- 2006 234 797
- US-A1- 2008 108 426
- US-B1- 6 342 010

## Description

### FIELD OF THE INVENTION

The invention relates to a communication pad for a terminal, in particular to a game pad for a game terminal.

Beyond this, the invention relates to communication terminal.

Moreover, the invention relates to a communication system.

### BACKGROUND OF THE INVENTION

Tournaments are a popular form of recreation and are amenable to many forms of organized activities, such as sports or games. There are two primary types of tournaments. In the first, players compete against one another (i.e., head-to-head), singularly or in teams, under controlled conditions. Examples include boxing, chess, karate and the like. In the second, players play a game without direct or simultaneous interaction with another player, where the player having the best score (e.g., golf, bowling, etc.), fastest time to completion (e.g., puzzles) or some combination thereof is pronounced the winner. Winners earn recognition for their skill and sometimes even prizes. Accomplished players of games of skill are often provided with an officially recognized ranking, rating and/or title.

Classic tournaments are usually held at a specific time and at a specific location, where they are conducted under a set of rules which apply equally to all contestants, and under the supervision of one or more judges and/or a sanctioning authority. A typical chess tournament may include one hundred to two hundred players who get together at a central location. They pay an entry fee and play a series of games over the course of a specified time period under the auspices of an officially sanctioned tournament director(s). At the end of the competition, the players are ranked and cash prizes are awarded to the top finishers. The United States Chess Federation administers a national rating system that ranks players with a numerical rating based upon the results of tournament sanctioned games against other rated players. Ratings may change over time as the player wins and loses games played in ongoing tournaments. Various rating ranges are given named titles. For example, an "Expert" chess player has a rating of between 2,000 and 2,200 and a "Master" chess player has a rating over 2,200 and so on.

One approach to electronic tournaments is disclosed in U.S. Pat. No. 5,083,271. In this Thacher system, a plurality of gaming terminals is networked to a central computer. A player purchases credit, enters a tournament, and is assigned a unique identification code. This identification code is stored in the gaming terminal and at the central computer. The player then proceeds to play a tournament game on the gaming terminal. When the player has finished the game, the player's score is transmitted to the central computer along with the player identification code and a game identification number. The central computer sorts through all of the scores at the conclusion of the tournament and determines a winner. The Thacher patent claims to provide some level of protection against substitution of players by utilizing a separate personal identification code for each player. Thus, to the extent that a player's personal identification code is not compromised, the person playing the game is uniquely identified with the achieved score. However, this arrangement has disadvantages including the extensive network between all of the participatory game terminals, and the inability to verify that the scores in the tournament games were accurately reported and fairly achieved. For example, there is nothing in the Thacher system which prevents a player from modifying the game software to produce a more favourable outcome or from intercepting communications of score and identification data from the remote gaming terminal to the central computer and then altering the same to register a false score. These gaming terminals may form communication terminals which may be accessed from so called game pads or communication pads.

US 2004/092310 A1 describes a gaming network which provides a method and system for identifying message senders through use of a communication protocol that includes a message field containing message contents and a verification field containing a verification signature. The verification signature is calculated by a message sender utilizing a valuation of the message contents and an identifier value provided by the message receiver.

### OBJECT AND SUMMARY OF THE INVENTION

Although, a plurality of different communication pads is known, there may be a need to provide a communication pad which provides a secure but flexible access to a respective communication terminal.

In order to meet the need defined above a communication system according to the independent claim is provided. Further improvements are disclosed in the dependent claims.

According to an exemplary aspect a communication pad for communication with a communication terminal is provided, wherein the communication pad comprises a processing unit and a non-volatile memory having a unique identification code stored thereon, wherein the processing unit is adapted to process the unique identification code to generate an identification signal, and wherein the communication pad is adapted to be identified to the communication terminal by sending the identification signal to the communication terminal.

In particular, the unique identification code may be a crypto key or a simple plain ID. Furthermore, the communication pad may be a game pad, adapted to communicate with a stand-alone game terminal. However, such a game pad may not only be used for input commands of a game but may also be connected to one computer, together with other game pads, and may be suitable to input chatting data, control a game on a game terminal and in some cases also to perform a simple game by itself. Thus, such a game pad may form a communication pad and may be configured to operate with specific game terminals, e.g. may include or implement a specific protocol. The identification signal may be used for an authentication procedure being executed between the communication pad and the communication terminal or an external authentication server, wherein the authentication procedure may generate as result an authorization signal, as an internal signal of the communication terminal. This authorization signal may be used for authorizing the specific communication pad for specific applications so that the communication pad may access and use them. Additionally, the communication pad may comprise a human interface, i.e. an interface adapted in such a way that a user may communicate or interact with the communication pad. For example, a keyboard, a mouse, a joystick, a trackball, a touchpad, a sensor and/or any other suitable human-computer interface may be used. Also a display may be implemented in the communication pad depending on the desired applications the communication pad is used for.

According to an exemplary aspect a communication terminal is provided, wherein the communication terminal comprises an authorization unit, and a communication interface adapted to receive an identification signal of a communication pad according to an exemplary aspect. In particular, the identification signal or a signal generated based on this identification signal may be used for controlling the access of the communication pad to the available applications.

In particular, the communication terminal may be a game terminal which may be transparent. In this context transparent does not mean that it is transparent for light but that unrestricted communication can be passed trough this terminal. Since the communication pad already includes or stores some crypto key the communication terminal may be transparent, i.e. not comprises an identification or authorization key, without compromising the security and/or authorization process when connected to another network, e.g. the Internet. In this case a mutual authentication procedure might be set-up between the communication pad and an external authentication server, and data streams would only be routed through the transparent communication terminal. Furthermore, the communication terminal may be a network based terminal and may be adapted to use network services for specific application, e.g. for software downloads and updates. For example, such a communication terminal may have access to a library of applications, e.g. game applications, offered by a trusted network service. A communication pad may authorize itself via such a communication terminal or an external trust centre and may use these applications under direct control of this trust centre.

According to an exemplary aspect a communication system is provided which comprises a communication terminal according to an exemplary aspect, a communication pad according to an exemplary aspect and a trust centre which are adapted to communicate with each other. In particular, the communication system may comprise a plurality of communication pads and/or a plurality of communication terminals. Furthermore, the trust centre may comprise an authentication server, wherein the communication pad is adapted to send the identification signal to the authentication server via the communication terminal.

The term "identification signal" may particularly denote a signal or data which enabling an identification or authorization of the communication pad, e.g. in an authorization process between the communication pad and the terminal or another external unit like the trust centre. For example, the identification signal may be formed or may include the original unique identification code or crypto key. In this case the processing of the processing unit in the communication pad basically may include only a preparing of the unique identification code for sending to the communication terminal. Alternatively, the identification signal may be formed or may include data generated by a pre-processing of the unique identification code in the processing unit, or may even form or include an authentication signal generated according to an authorization protocol.

By providing a communication pad which has a crypto key, e.g. a secured element, stored thereon, the communication pad may be personalized for a specific user or user group, i.e. an authorization may be possible. In particular, since the crypto key is stored on the communication pad and the communication terminal may have a constant network or internet connection, the communication terminal may be a transparent for the execution of the mutual authentication protocol between communication pad and authentication server. So a successful authentication of the communication pad may enable certain applications supported by the communication terminal for a defined limited time. Thus, it may be possible to easily switch the communication pad from one communication terminal to another one, e.g. a person may carry the communication pad from one communication terminal used at a first point in time to another communication terminal used at a second point in time. The period of time for which the communication may access and use the communication terminal application may be limited, so that a re-authentication of the communication pad may be required in certain defined time intervals. In case the different communication terminals, e.g. game terminals, support the same transmission and authorizations protocols a system of communication pad(s) and communication terminals may be provided which can be used in a secure and flexible way. Furthermore, the providing of a communication pad having a cryptographic or secure element stored in a non-volatile memory may allow to only give access to terminal-resident software, e.g. game or more general data communication software, only if an authorization of one or a plurality of connected communication pads, e.g. game pads, was been successful. This may allow for providing free communication or game software on open or transparent communication terminals although the possibility may be still enabled to control and monitor each login or access of a possibly personalized communication pad, e.g. game pad or mobile phone. Thus, it may be possible to charge the registered user of the respective communication pad for the specific access, e.g. data transfer or accessing a game on a game terminal.

Next, further exemplary embodiments of the communication pad are described. However, these embodiments also apply to the communication terminal and to the communication system.

According to another exemplary embodiment of the communication pad the processing unit is further adapted to process authentication challenge data received from external to generate the identification signal.

According to another exemplary embodiment of the communication pad the processing unit comprises a secured authorization unit which is adapted to generate the identification signal. In particular, the processing unit may be adapted to perform a mutual authentication procedure with the communication terminal or authentication server and to generate an internal identification signal.

However, the communication pad may also be adapted that a unique identification code or crypto key stored in the secured memory of the communication pad is sent to the communication terminal instead of using the secured crypto key or unique identification code to process the mutual authentication. That is, an authorization based on the unique identification code may be alternatively performed on the communication pad or on the communication terminal.

According to another exemplary embodiment of the communication pad the non-volatile memory is a secured memory. In particular, the non-volatile memory may be an EPROM, EEPROM, a flash memory or even some internal disc storage. The secured memory may be implemented as a secured partition of a general non-volatile memory or by a specific separated secured memory unit.

According to another exemplary embodiment of the communication pad the secured memory is protected from external accessing.

That is, the non-volatile memory and/or the communication pad may be configured in such a way that it can only be accessed by a secured authorization unit of the communication pad. No access from outside of the communication pad may be allowed. That is the secured memory may be protected from external requests or attacks. For example, DMA and/or CPU transfers in a specially protected operation mode may be enabled, while other accessing modes may be disabled or forbidden. In particular, only DMA accesses and/or such specific CPU transfers may be enabled.

According to another exemplary embodiment the communication pad further comprises a communication interface, adapted to send the identification signal. In particular, the communication interface may be adapted to receive/send unencrypted/encrypted data during the authentication procedure or send the unique identification code.

In particular, the communication interface may be a wireless communication interface, adapted to send the identification signal wireless, e.g. via RF signals, infrared signals, optical signals, acoustic signals, or other suitable wireless communication signals. However, the communication interface may alternatively a wire based interface, i.e. an interface sending the signal via a wired connection to the communication terminal. Thus, a communication link between the communication pad and the communication terminal may be established via the communication interface.

Next, further exemplary embodiments of the communication terminal are described. However, these embodiments also apply to the communication pad and the communication system.

According to another exemplary embodiment of the communication terminal the authorization unit is adapted to process the identification signal to perform an authorization process.

In particular, this processing may also be performed by using an internal predetermined authentication protocol. This may be advantageous in case the communication terminal is a stand-alone device, e.g. a stand-alone game terminal.

According to another exemplary embodiment of the communication terminal the authorization unit is adapted to establish a connection to an external network service which may be adapted to perform the predetermined authentication protocol.

In particular, the connection to an external network service may be implemented via the Internet, e.g. by establish an online connection or link. In case the communication terminal receives an authorization confirmation from the external network service or external network element, e.g. a server, a connection between the communication terminal and the communication pad may be maintained. In case the communication terminal does not receive a confirmation signal, e.g. the authorization process fails, the communication terminal may close down the connection between the communication terminal and the communication pad.

According to another exemplary embodiment of the communication terminal the communication terminal is adapted to allow access to specific applications in case an authorization based on the identification signal is confirmed. The authorization may be performed based on an authentication protocol. That is, the access to specific applications may be allowed based on an executed authentication protocol.

Such application may be a specific game, or Internet service which may be resident in the communication terminal or in an external network element.

A gist of an exemplary aspect may be seen in providing a wireless game pad and game terminal system enabling a network-based authentication function that allows use of game applications provided online under full control of trusted network service, whereas the communication pad may be a proprietary mobile device of the user while the communication terminal may be a public domain device. The authentication function may allow the game pad or game pad device to authenticate itself towards a game terminal that hosts a game application. In particular, the game pad may be connected through a wireless or wired communication link to a stand-alone game terminal or to a base-station connected to a port of a computer. A plurality of game pads may be connected to the game terminal or base station by wireless or wired connection and control a program being executed by the game terminal or computer.

The game pad device architecture may include a control logic, e.g. a processing unit or a CPU that controls the operation modes, a volatile and non-volatile memory and related memory control unit, a secured element, e.g. crypto-unit, which may use part of the non-volatile memory as specially secured memory, an optional display unit depending on the display requirements for the game pad device and, if a wireless connection is supported, an RF-transceiver interface for the communication with the game terminal or computer.

The game pad device CPU may monitor and control the above function units. A power source unit, which may be implemented into the game pad, supplies an operating power source to each function unit. The unique device ID and crypto or encryption key data, that is used by the secured element to execute the authentication protocol towards a game terminal, may be stored in the secured part of the non-volatile memory, which may only be accessed by the secured element either by DMA or via CPU transfers in a specially protected operation mode.

The game terminal or base station may either be implemented as a stand-alone device, which supports the authentication protocol in the same way, in which the game pad device does, or it may be implemented as a network terminal with connection to an external network service, e.g. a trust centre. In this case the game terminal might for each authentication request by a game pad device establish an online connection and might route the authentication process through to the trusted network service. If the trusted network service confirms a successful authentication, then the terminal may continue its interaction with the game pad device and start the requested game application. If the authentication process fails the connection with the game pad application may be closed.

The aspects and embodiments defined above and further aspects of the invention are apparent from the examples of embodiment to be described hereinafter and are explained with reference to these examples of embodiment. It should be noted that features described in connection with a specific exemplary embodiment or exemplary aspect may be combined with another exemplary embodiment or another exemplary aspect.

### BRIEF DESCRIPTION OF THE DRAWINGS

The invention will be described in more detail hereinafter with reference to an exemplary embodiment but to which the invention is not limited.

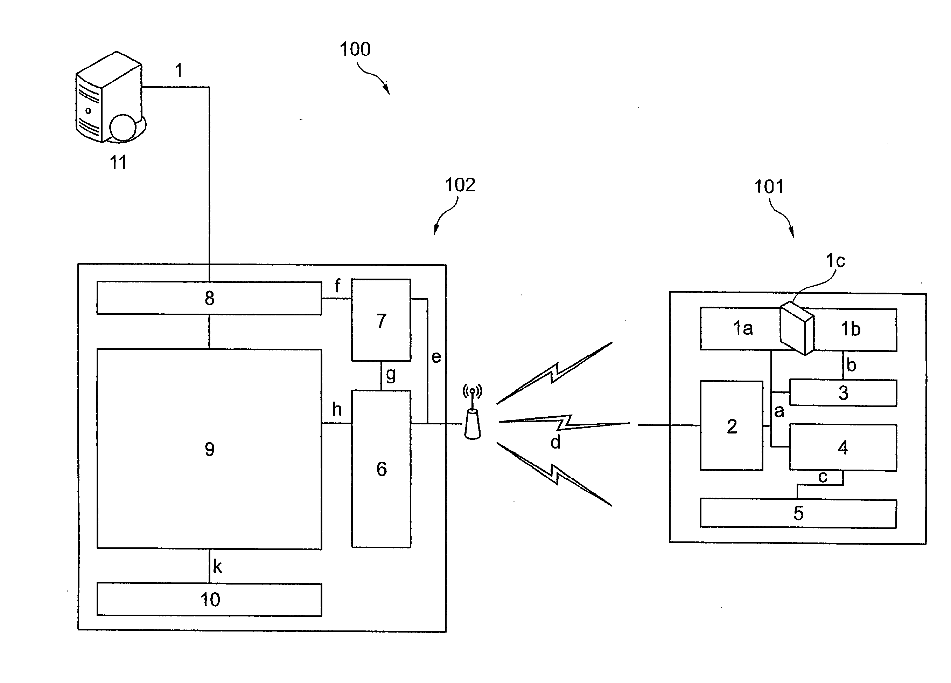

Fig. 1 schematically illustrates a communication system according to an exemplary embodiment.

### DESCRIPTION OF EMBODIMENTS

The illustration in the drawing is schematic.

Fig. 1 schematically illustrates a communication system 100. The communication system comprises a game pad 101, a game terminal 102 and a game application server or trust centre 11. Of course the communication system may comprise a plurality of game pads and/or game terminals. The game pad 101 comprises a non-volatile memory 1, which comprises two partitions 1a which form a common configuration memory and a secured key memory 1b, respectively. The two partitions are separated from each other, e.g. different access possibilities are provided for the two partitions, wherein the separation is schematically indicated by wall 1 c in Fig. 1. Of course the two memory components may be formed by two physically distinct units or elements. A secured element or crypto key may be stored in the secured key memory 1b and may be used for authentication of the game pad. The game pad 101 further comprises a communication interface which is preferably formed by a wireless communication interface 2. However, the communication interface may alternatively or additionally be formed by a wired communication interface. That is, the game pad may provide a wireless communication, a wired communication or a combination of both. Furthermore, the game pad 101 comprises a secured authentication unit 3 which may perform an authentication processing within game pad, e.g. by generating an identification signal or an authentication response from so-called authentication challenge data received from the authentication server via the communication terminal by using the secured element. Therefore the secured authentication unit 3 is connected to the secured key memory 1b via a DMA bus b as well as to the common configuration memory 1 a which is indicated by a common address/date bus a. The secured authentication unit 3 receives authentication challenge data and provides the authentication response or the unique identification code to the communication interface 2 via common address/data bus a, which communication interface 2 is adapted to send or transmit these data to or from the game terminal 102. Additionally the game pad 101 comprises a game controller unit 4 which is adapted to control a game based on a user input which may be input into the game pad 101 via a user interface, e.g. buttons, a keyboard, sensors, a trackball or a joystick or the like and is sent to the game controller unit 4 via a bus c for user/human interface peripheral 10s.

The game terminal 102 comprises a communication host interface 6 which receives or sends data, e.g. the authentication data, identification signal or unique identification code or game controller signals, via a communication link which is indicated in Fig. 1 by the flash d. The communication host interface 6 preferably provides the same functionality as the communication interface 2 of the game pad, e.g. in case the communication interface 2 is adapted for wireless communication the communication host interface 6 is as well adapted for wireless communication. Furthermore, the game terminal 102 comprises a secured authentication unit 7 as well which is connected to the communication host interface 6 via a game pad access-control link g and via an interface by-pass e which is used for game-pad authentication. The secured authentication unit 7 is connected to a web server communication interface 8 via a game pad authentication web-com-link which may be used to perform the authentication by the trust centre 11 via an Internet connection or link 1. The game terminal 102 further comprises a game application control unit 9 which is connected to the communication host interface 6 via a game application - game pad interface h. The game application control unit 9 is adapted to perform the controlling of a game played by the user of the game pad and residing on the game terminal. Additionally, the game terminal may comprise a user or human interface 10 as well, which is connected to the game application control unit 9 via a bus or link for human interface peripheral 10s and which may be used to provide input/output via a display, sound sensors or the like.

Thus, a wireless game pad may be provided which may be equipped with an identification function that makes use of a secured element which supports encrypted authentication protocols, which may allow the game pad device to authenticate itself towards a game terminal that hosts a game application and supports the authentication protocol. The game terminal may be a stand-alone device that also includes a secured element or it can be a network terminal that supports an online authentication e.g. via the Internet. The game terminal may be a public domain device that does not have to include any human interface control functions for game, because these are part of the user proprietary communication pad, but only display and sound functions.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A communication system (100) comprising:
an authentication server (11),
a communication pad (101) comprising:
a processing unit, and
a non-volatile memory (1b) having a unique identification code stored thereon,
wherein the processing unit is adapted to process the unique identification code to generate an identification signal for authorization of the communication pad (101),
**characterized in that** the communication pad (101) is a wireless game pad and **in that** the communication system (100) further comprises a transparent communication terminal (102) being a game terminal,
wherein the communication pad (101) is adapted to be identified to the transparent communication terminal (102) by sending the identification signal to the transparent communication terminal (102),
wherein the transparent communication terminal (102) comprises:
a communication interface (6) adapted to receive an identification signal of the communication pad (101),
wherein the communication pad (101) is adapted to send the identification signal to the authentication server (11) via the transparent communication terminal (102),
wherein the transparent communication terminal (102) further comprises an interface by-pass (e) for authentication of the communication pad (101) by the authentication server (11) via an Internet connection (1).

2. The communication system (100) according to claim 1,
wherein the processing unit of the communication pad (101) is further adapted to process authentication challenge data received from external to generate the identification signal.

3. The communication system (100) according to claim 2,
wherein the processing unit of the communication pad (101) comprises a secured authorization unit (3) which is adapted to generate the identification signal which represents authentication response signal.

4. The communication system (100) according to claim 1,
wherein the non-volatile memory (1b) of the communication pad (101) is a secured memory.

5. The communication system (100) according to claim 4,
wherein the secured memory of the communication pad (101) is protected from an access which is external to the communication pad (101).

6. The communication system (100) according to claim 1,
wherein the communication pad (101) further comprises a communication interface (2), adapted to send the identification signal.

7. The communication system (100) according to claim 1,
wherein the transparent communication terminal (102) comprises an authorization unit (7) which is adapted to process the identification signal to perform an authorization process.

8. The communication system (100) according to claim 7,
wherein the authorization unit (7) of the transparent communication terminal (102) is adapted to establish a connection to an external network service which may be adapted to perform a predetermined authentication protocol.

9. The communication system (100) according to claim 1,
wherein the transparent communication terminal (102) is adapted to allow access to specific application in case an authorization based on the identification signal is confirmed.

## Patentansprüche

1. Ein Kommunikationssystem (100), welches aufweist:
einen Authentifizierungsserver (11),
ein Kommunikationspad (101), welches aufweist:
eine Verarbeitungseinheit, und
einen nicht-flüchtigen Speicher (1b), welcher darauf gespeichert einen eindeutigen Identifikationscode hat,
wobei die Verarbeitungseinheit eingerichtet ist, den eindeutigen Identifikationscode zu verarbeiten, um ein Identifikationssignal zum Autorisieren des Kommunikationspads (101) zu generieren,
**dadurch gekennzeichnet, dass** das Kommunikationspad (101) ein drahtloses Spielepad ist, und dass das Kommunikationssystem (100) ferner ein transparentes Kommunikationsterminal (102) aufweist, welches ein Spieleterminal ist,
wobei das Kommunikationspad (101) eingerichtet ist, gegenüber dem transparenten Kommunikationsterminal (102) mittels Sendens des Identifikationssignals zu dem transparenten Kommunikationsterminal (102) identifiziert zu werden,
wobei das transparente Kommunikationsterminal (102) aufweist:
ein Kommunikationsinterface (6), welches eingerichtet ist, ein Identifikationssignal des Kommunikationspads (101) zu empfangen,
wobei das Kommunikationspad (101) eingerichtet ist, das Identifikationssignal über das transparente Kommunikationsterminal (102) an den Authentifizierungsserver (11) zu senden,
wobei das transparente Kommunikationsterminal (102) ferner einen Interface-Bypass (e) zum Authentifizieren des Kommunikationspads (101) mittels des Authentifizierungsservers (11) über eine Internet-Verbindung (1) aufweist.

2. Das Kommunikationssystem (100) gemäß Anspruch 1, wobei die Verarbeitungseinheit des Kommunikationspads (101) ferner eingerichtet ist, Authentifizierung-Challenge-Daten zu verarbeiten, welche von extern empfangen werden, um das Identifikationssignal zu generieren.

3. Das Kommunikationssystem (100) gemäß Anspruch 2, wobei die Verarbeitungseinheit des Kommunikationspads (101) eine gesicherte Autorisationseinheit (3) aufweist, welche eingerichtet ist, das Identifikationssignal zu generieren, welches ein Authentifizierung-Response-Signal repräsentiert.

4. Das Kommunikationssystem (100) gemäß Anspruch 1, wobei der nicht-flüchtige Speicher (1b) des Kommunikationspads (101) ein gesicherter Speicher ist.

5. Das Kommunikationssystem (100) gemäß Anspruch 4, wobei der gesicherte Speicher des Kommunikationspads (101) vor einem Zugriff geschützt ist, welcher extern zu dem Kommunikationspad (101) ist.

6. Das Kommunikationssystem (100) gemäß Anspruch 1, wobei das Kommunikationspad (101) ferner ein Kommunikationsinterface (2) aufweist, welches eingerichtet ist, das Identifikationssignal zu senden.

7. Das Kommunikationssystem (100) gemäß Anspruch 1, wobei das transparente Kommunikationsterminal (102) eine Autorisationseinheit (7) aufweist, welche eingerichtet ist, das Identifikationssignal zu verarbeiten, um einen Autorisationsprozess durchzuführen.

8. Das Kommunikationssystem (100) gemäß Anspruch 7, wobei die Autorisationseinheit (7) des transparenten Kommunikationsterminals (102) eingerichtet ist, eine Verbindung zu einem externen Netzwerkservice zu etablieren, welcher eingerichtet sein mag, ein vorgegebenes Authentifizierungsprotokoll durchzuführen.

9. Das Kommunikationssystem (100) gemäß Anspruch 1, wobei das transparente Kommunikationsterminal (102) eingerichtet ist, Zugriff zu spezifischen Anwendungen zu erlauben, im Fall dass eine Autorisation basierend auf dem Identifikationssignal bestätigt ist.

## Revendications

1. Système de communication (100) comprenant:
un serveur d'authentification (11),
une tablette de communication (101) comprenant:
une unité de traitement, et
une mémoire non-volatile (1b) dans laquelle est stocké un code d'identification unique,
dans lequel l'unité de traitement est agencée de manière à traiter le code d'identification unique pour générer un signal d'identification pour une autorisation de la tablette de communication (101),
**caractérisé par le fait que** la tablette de communication (101) est une tablette de jeu sans fil et **par le fait que** le système de communication (100) comporte en outre un terminal de communication transparent (102) qui est un terminal de jeu,
dans lequel la tablette de communication (101) est agencée de manière à être identifiée par le terminal de communication transparent (102) grâce à l'envoi du signal d'identification au terminal de communication transparent (102),
dans lequel le terminal de communication transparent (102) comporte:
une interface de communication (6) agencée de manière à recevoir un signal d'identification de la tablette de communication (101),
dans lequel la tablette de communication (101) est agencée de manière à envoyer le signal d'identification au serveur d'authentification (11) par l'intermédiaire du terminal de communication transparent (102),
dans lequel le terminal de communication transparent (102) comporte en outre une interface de dérivation (e) pour l'authentification de la tablette de communication (101) par le serveur d'authentification (11) par l'intermédiaire d'une connexion Internet (I).

2. Système de communication (100) selon la revendication 1,
dans lequel l'unité de traitement de la tablette de communication (101) est en outre agencée de manière à traiter des données de challenge d'authentification reçues de l'extérieur pour générer le signal d'identification.

3. Système de communication (100) selon la revendication 2,
dans lequel l'unité de traitement de la tablette de communication (101) comporte une unité d'autorisation sécurisée (3) qui est agencée de manière à générer le signal d'identification qui représente le signal de réponse d'authentification.

4. Système de communication (100) selon la revendication 1,
dans lequel la mémoire non-volatile (1b) de la tablette de communication (101) est une mémoire sécurisée.

5. Système de communication (100) selon la revendication 4,
dans lequel la mémoire sécurisée de la tablette de communication (101) est protégée contre un accès qui est externe à la tablette de communication (101).

6. Système de communication (100) selon la revendication 1,
dans lequel la tablette de communication (101) comporte en outre une interface de communication (2) agencée de manière à envoyer le signal d'identification.

7. Système de communication (100) selon la revendication 1,
dans lequel le terminal de communication transparent (102) comporte une unité d'autorisation (7) qui est agencée de manière à traiter le signal d'identification pour réaliser un processus d'autorisation.

8. Système de communication (100) selon la revendication 7,
dans lequel l'unité d'autorisation (7) du terminal de communication transparent (102) est agencée de manière à établir une connexion à un service de réseau externe qui peut être agencé pour exécuter un protocole d'authentification prédéterminé.

9. Système de communication (100) selon la revendication 1,
dans lequel le terminal de communication transparent (102) est agencé de manière à permettre un accès à une application particulière dans le cas où une autorisation fondée sur le signal d'identification est confirmée.
